## Europäisches Patentamt

## European Patent Office

## Office européen des brevets

(11) Numéro de publication: **0 033 431**
**B1**

(12) **FASCICULE DE BREVET EUROPEEN**

(45) Date de publication du fascicule du brevet:
30.11.83

(51) Int. Cl.³: **B 41 M 5/24**, G 11 C 13/04,
G 11 B 7/24

(21) Numéro de dépôt: **80401865.3**

(22) Date de dépôt: **24.12.80**

(54) Structure de mémoire permanente, à inscription thermo-optique et lecture optique, et procédé d'inscription dans une telle structure.

(30) Priorité: **01.02.80 FR 8002246**

(43) Date de publication de la demande:
**12.08.81 Bulletin 81/32**

(45) Mention de la délivrance du brevet:
**30.11.83 Bulletin 83/48**

(84) Etats contractants désignés:
**DE GB IT NL SE**

(56) Documents cités:
**DE - A - 2 744 533**
**DE - A - 2 925 767**
**DE - B - 2 701 218**
**FR - A - 2 368 779**
**US - A - 3 866 187**

**IBM TECHNICAL DISCLOSURE BULLETIN, vol. 16, no. 1,
juin 1973 New York, US R.J. VON GUTFELD: "Structure
for reversible SmS optical memories", pages 108,109
IBM TECHNICAL DISCLOSURE BULLETIN, vol. 21, no. 2,
juillet 1978 New York, US J.J. CUOMO et al.: "Digital
recording by thin film spalling", pages 859-860
CHEMICAL ABSTRACTS, vol. 73, no. 22, 30 novembre
1970, ref. no. 114995r, page 394 Columbus, Ohio, US A.L.
HARRIS et al.: "Continuous-wave laser recording on
metallic thin film"**

(73) Titulaire: **THOMSON-CSF, 173, Boulevard Haussmann,
F-75379 Paris Cedex 08 (FR)**

(72) Inventeur: **Cornet, Jean, THOMSON-CSF SCPI 173, Bld
Haussmann, F-75360 Paris Cedex 08 (FR)**

(74) Mandataire: **Taboureau, James et al, THOMSON-CSF
SCPI 173, Bld Haussmann, F-75379 Paris Cedex 08 (FR)**

# 0 033 431

## Structure de mémoire permanente, à inscription thermo-optique et lecture optique, et procédé d'inscription dans une telle structure

L'invention concerne une structure de mémoire permanente, inscriptible par voie thermo-optique et lisible par voie optique.

Elle s'applique plus particulièrement aux moyens de stockage de données à accès optique, et l'invention sera décrite en s'appuyant sur l'exemple non limitatif des disques désignés sous le nom générique de disques optiques, sur lesquels les données sont enregistrées par voie thermique et stockées de façon permanente, et lues par voie optique: ces disques comportent une couche inscriptible dont l'altération locale constitue l'enregistrement de données.

Les informations mises en mémoire peuvent se présenter sous forme analogique ou sous forme binaire; ces deux cas appartiennent au domaine de l'invention. La lecture des informations mises en mémoire se fait par des procédés basés sur la transmission à travers la couche inscriptible, ou sur la diffraction sur cette même couche, d'un faisceau lumineux, et traduits en signaux électriques.

Selon l'art connu, la lecture d'un disque optique se fait par transmission ou par réflexion d'un faisceau lumineux, généralement un faisceau laser, à travers le matériau support du disque qui est transparent et recouvert d'une couche absorbante et réflectrice. L'inscription se fait par ablation de la couche absorbante par voie thermique, ce qui forme un trou dans cette couche; le faisceau lumineux de lecture en passant à travers ce trou, fournit un signal électrique, tandis que sa réflexion par la couche correspond à l'absence de signal, dans le cas de la lecture par transmission. Si la lecture se fait par réflexion, la réponse électrique est inversée.

L'inconvénient de ce procédé d'inscription par ablation est que les bords des trous ne sont pas plans et nets, ce qui produit un bruit de fond lors de la lecture du disque optique. Au cours de l'inscription, la couche absorbante n'est pas volatilisée mais fondue et la quantité de matière fondue se retrouve autour des trous sous forme d'un bourrelet où elle s'est regroupée par suite des forces de capillarité dans la matière fondue.

En outre, la duplication de ces disques est délicate car elle suppose une reproduction parfaite des trous existants dans une couche, qui n'a elle-même que quelques dizaines de nanomètres d'épaisseur. De plus, elle transforme un contraste d'amplitude en un contraste de phase, ce qui dans certains cas présente un inconvénient pour la lecture.

Selon une; autre forme d'art connu, la couche absorbante, c'est-à-dire la couche d'inscription du disque optique, est seulement déformée par suite de la dilatation ou de la dégradation thermique d'une couche de polymère sous-jacente qui se gonfle sous l'effet de la chaleur d'un faisceau lumineux d'inscription.

Dans le cas où il y a seulement déformation de la couche absorbante, la lecture du vidéodisque se fait par réflexion, soit par une face du disque en lisant les produbérances de la couche d'inscription, soit par l'autre face du disque et à travers le support de celui-ci en lisant les vallonnements ou creux de la couche d'inscription.

L'inconvénient de cette seconde forme de structure de disque optique est que, si la duplication est possible, elle nécessite cependant deux étapes de préparation avec des technologies différentes, l'une pour la couche sous-jacente de polymère, l'autre pour la couche métallique. En outre, et comme on le verra ultérieurement plus en détail, cette structure est dans certains cas fragile et très délicate à manipuler.

Selon l'invention, un disque optique est muni d'une structure de mémoire permanente constituée par une couche d'inscription sensible à la chaleur, ellemême formée par au moins une double couche métallique qui se déforme de façon permanente sous l'action d'un faisceau laser. Ce résultat obtenu sans autre traitement ultérieur mécanique ou chimique est dû à l'association d'une première couche d'un métal très dilatable et d'une deuxième couche d'un métal peu dilatable mais ductile. Dans cette structure de mémoire, les données sont enregistrées de façon non effacable sous forme d'une déformation de la double couche sans perçage.

De façon plus précise, l'invention consiste en une structure de mémoire permanente, telle que definie dans la revendication 1.

L'invention sera mieux comprise et ses avantages ressortiron mieux de la description qui va en être faite, laquelle s'appuie sur les figures annexées qui représentent:

— la figure 1, une structure de point mémoire selon l'art connu, avec perforation de la couche d'inscription;

— figure 2, une autre structure de point mémoire selon l'art connu, avec déformation de la couche d'inscription;

— figure 3, une structure de point mémoire selon l'invention.

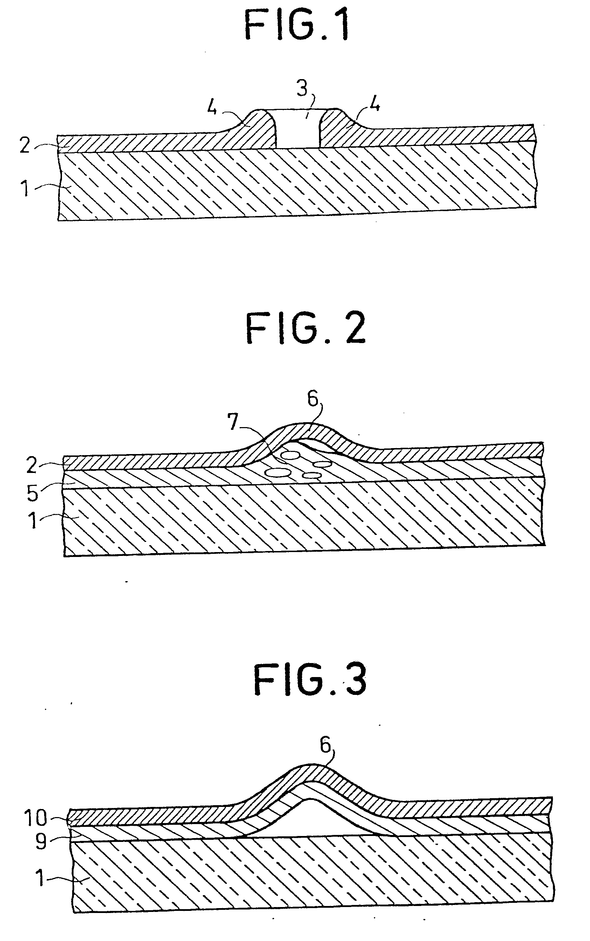

La figure 1 représente, vu en coupe, un très petit fragment d'un disque optique correspondant à un point mémoire. Il s'agit de la structure la plus connue dans laquelle la perforation de la couche d'inscription permet la lecture par réflexion ou par transmission.

Le support 1, ou substrat, du disque optique est généralement constitué par une plaque d'un matériau organique transparent tel que la famille des polyméthacrylates de méthyl ou par un verre minéral. Sur ce substrat 1, est déposée une couche 2, le plus souvent métallique. Au cours de l'inscription des données, la couche d'inscription absorbante 2 est perforée en 3 par fusion de ladite couche sous l'effet de la chaleur apportée, de façon courante, par un faisceau laser. Cependant, l'énergie apportée par le laser, si elle est suffisante pour faire fondre le métal de la couche 2 sans détériorer le substrat organique 1, n'est cependant pas suffisante pour volatiliser la quantité de métal correspondant au trou 3. C'est pourquoi cette quantité de métal se retrouve sur le disque achevé sous forme d'un bourrelet 4 autour du trou, bourrelet qui s'est formé par suite des tensions superficielles dans le métal fondu et dans le métal proche du point de fusion autour du trou 3. Ce bourrelet 4, même si son épaisseur ne se compte qu'en nanomètres, a cependant l'inconvénient d'apporter au cours de la lecture un bruit de fond relativement important puisque le bord du bourrelet, qui défile deux fois sous le faisceau laser de lecture au cours de la rotation du disque, peut modifier de façon notable et aléatoire le signal de lecture provenant de la surface du disque entre les trous.

La figure 2 représente la vue en coupe d'un point mémoire selon l'art connu, point mémoire obtenu par déformation de la couche sans perçage.

Le disque optique comporte un substrat rigide 1 qui, comme dans le cas de figure précédent, est constitué par un matériau transparent tel qu'un verre minéral ou organique. Il est d'abord recouvert par une couche 5 d'un polymère puis par une seconde couche 2 métallique. Au cours de l'illumination laser du disque, la quantité d'énergie apportée par le rayonnement est absorbée par le couche métallique 2 et transmise à la couche de polymère 5 qui lui est voisine, dans la zone d'impact du faisceau laser. La chaleur transmise à la matière polymérisée de la couche 5 provoque un début de dégradation thermique avec gonflement local en 7, et, comme la couche métallique 2 n'a elle-même que quelques nonomètres d'épaisseur, elle est repoussée par le polymère en expansion, ce qui forme une protubérance 6. La lecture d'information stockée sous forme de protubérance résulte de la diffraction d'un faisceau lumineux soit sur la partie convexe de la protubérance, soit sur sa partie concave à travers l'épaisseur du disque, c'est-à-dire à travers le substrat 1.

Selon la nature du polymère de la couche 5, l'inscription de donnée peut se faire sous forme d'un gonflement de la couche métallique 2, sans perçage, ou sous forme d'un éclatement de la couche métallique 2, donc avec perçage, ce qui ramène au cas de la figure 1.

Le document FR-A-2 368 779, au nom de THOMSON-BRANDT, décrit une structure de mémoire optique permanente, comprenant un substrat à faible coefficient de dilatation linéaire, sur lequel est déposée une couche thermodégradable, elle-même recouverte d'une couche métallique inscriptible dont la fonction est, dans un premier temps, d'absorber la chaleur du faisceau laser au cours de l'inscription. La couche thermodégradable est un composé organique nitré qui, sous l'effet de la chaleur, se décompose: les gaz percent la couche métallique inscriptible.

Cependant, cette structure de point mémoire peut présenter quelques inconvénients tout d'abord en ce qu'elle implique l'utilisation de 2 technologies différentes (une pour le polymère et l'autre pour la couche métallique). D'autre part, les polymères peuvent avoir une durée de vie limitée en particulier dans des atmosphères très humides ou corrosives ou en présence de solvants ou encore par suite du rayonnement lumineux, par exemple la lumière solaire. Il en résulte qu'il est nécessaire dans la plupart des cas de protéger la structure, par exemple par un capot, ou un vernis et de la conserver à l'obscurité.

La figure 3 représente une structure de point mémoire selon l'invention.

Sur un support plan et rigide 1 sont déposées, par pulvérisation sous vide ou par tout autre moyen connu de l'homme de l'art, une première couche métallique 9 elle-même recouverte par une deuxième couche métallique 10. La figure 3 représente un point mémoire lorsqu'il a été enregistré, mais à l'origine, sur un disque vierge, les deux couches métalliques 9 et 10 sont parfaitement planes et adhérentes au substrat 1.

La particularité de la structure de point mémoire selon l'invention réside en ce que la première couche métallique, est constituée par un premier métal dont le coefficient de dilatation thermique est très élevé, tandis que la seconde couche métallique est constituée par un second métal dont le coefficient de dilatation thermique est peu élevé mais qui, par ailleurs est très ductile . Dans une forme de réalisation, celle représentée par le cas de la figure 3, le métal très dilatable constitue la couche 9, prise en sandwich entre le substrat et la seconde couche métallique, tandis que le métal peu dilatable constitue la couche 10 extérieure à l'ensemble.

Lorsqu'un faisceau laser frappe la surface métallique du disque, la quantité d'énergie qu'il apporte est absorbée par l'ensemble des deux couches 9 et 10, dont chacune a une épaisseur comprise entre 3 et 5 nanomètres environ, c'est-à-dire 6 à 10 nanomètres au total. Sous une telle épaisseur, le coefficient d'absorption optique est voisin de 50% et la moitié de l'énergie apportée par l'impulsion laser crée une dilatation dans les couches métalliques. En fait, les deux couches métalliques ayant des coefficients de dilatation différents, il s'ensuit que la couche la plus dilatable impose sa déformation à la couche la moins dilatable et que celle-ci, après le refroidissement de l'ensemble, conserve un profil déformé parce que le métal qui constitue la couche la moins dilatatble est très ductile. L'allongement lui fait dépasser sa limite d'élasticité sans atteindre sa limite de rupture, et, de ce fait, il reste une déformation de la couche ductile après refroidissement.

Après refroidissement du point mémoire, la surface du disque présente donc une déformation 6, permanente en ce qui concerne le métal ductile. Le métal le plus dilatable, c'est-à-dire la couche 9 dans le cas de figure présenté, peut soit se décoller du métal ductile, soit rester en adhérence mais dans ce cas les forces de tension au refroidissement tendent à diminuer légèrement la protubérance 6.

Pour obtenir une déformation permanente et lisible des deux couches métalliques, il faut et il suffit que l'énergie apportée par le faisceau laser apporte aux deux couches une température de quelques centaines de degrés, mais en tous les cas inférieure à la température de fusion du métal le plus fusible.

A titre d'exemple, la couche constituée par un métal très dilatable peut avantageusement être réalisée avec l'un des métaux suivants:

| | métal Cd | Zn | Tl | Mg | Al | Mn | Ag |
|---|---|---|---|---|---|---|---|
| coefficient de dilatation en $10^{-6} \cdot K^{-1}$ | 53 | 53 | 36 | 27 | 24 | 23 | 20 |

tandis que la couche de métal peu dilatable mais ductile est choisie parmi:

Mo    Zr    Ti    Ta    Cr    Pt

qui ont tous un coefficient de dilatation thermique inférieur à $10 \cdot 10^{-6} \cdot K^{-1}$.

Diverses variantes peuvent intervenir dans la réalisation du point mémoire tel qu'il a été représenté en figure 3 et tel que défini jusqu'à présent.

En premier lieu, l'ordre des couches très dilatable et peu dilatable peut être inversé par rapport à ce qui a été défini, c'est-à-dire qu'on peut concevoir que la couche très dilatable 9 soit déposée par dessus la couche peu dilatable 10 qui se trouve donc prise en sandwich dans la structure du disque. Cependant, la première structure proposée est préférable, car le métal très dilatable exerce une pression sur le métal peu dilatable, il n'y a donc aucun risque de décollement entre les deux couches. Dans le cas inverse, c'est-à-dire lorsque la couche 9 est extérieure à la structure, le métal très dilatable exerce une traction sur le métal peu dilatable et il y a un risque de décollement entre les deux couches, c'est-à-dire qu'en fait, la donnée ne sera pas inscrite sous forme d'une déformation puisque après le refroidissement la couche peu dilatable n'ayant pas dépassé son point limite d'élasticité, il n'y a pas eu de déformation permanente.

En outre, chacune des couches peut être réalisée par une association ou un alliage entre deux ou plusieurs métaux de chacune des deux familles.

Enfin, si le cas d'une bi-couche est simple et facilite la compréhension de l'invention, il n'exclut pas le cas d'autres couches en plus grand nombre: on peut par exemple concevoir une première couche d'accrochage sur le substrat, les deux couches de deux matériaux présentant un coefficient de dilatation différentiel intéressant pour l'application, une quatrième couche de protection contre l'oxydation communiquant à la surface du disque, et en particulier aux protubérances, un aspect ou un coefficient de réflexion intéressant pour la lecture du vidéodisque. D'autres solution ou cominaisons possibles sont également envisageables.

Cette structure de point mémoire permanent est intéressante pour différentes raisons.

En premier lieu, elle n'utilise qu'une seule technologie de réalisation, c'est-à-dire que les deux couches métalliques ou, de façon plus générale, la totalité des couches métalliques déposées sur le substrat peuvent se faire au cours d'une suite d'opérations dans le même bâti à vide, alors que les structures précédemment connues nécessitaient dans certains cas des changements pour déposer une couche de polymère ou une ou des couches métalliques.

En second lieu, l'inscription obtenue sous la forme d'une protubérance 6 est rigide car elle est composée de deux couches métalliques et elle permet une reproduction par des moyens relativement faciles, si une reproduction est nécessaire.

La protection, lorsqu'elle est nécessaire, de la surface enregistrée, est toujours possible par des vernis, des laques thermo ou photo-sensibles ou par un capotage mécanique. Pour une conservation de longue durée, telle qu'un stockage de données devant être préservées pendant des années, un archivage est possible après métallisation par une couche épaisse de la surface métallique du disque.

Enfin la lecture des données enregistrées reste compatible avec les procédés et moyens de lecture soit par la face du disque correspondant à la protubérance, soit à travers le support du disque si celui-ci est en un matériau transparent et c'est alors le vallonnement ou creux de la déformation métallique qui est lu.

La présente invention n'est pas limitée aux modes de réalisation qui ont été explicitement décrits cidessus. Elle s'applique aux supports rigides ou souples, plans ou cylindriques, animés d'un mouvement de rotation ou linéaire. Elle inclut les diverses variantes et généralisations comprises dans le domaine des revendications ci-après.

**0 033 431**

## Revendications

1. Structure de mémoire permanente, à inscription thermo-optique et lecture optique, supportée par un substrat (1), en matériau à faible coefficient de dilatation, et animé d'un mouvement de défilement, cette structure étant caractérisée en ce que la couche inscriptible comprend au moins une double couche métallique par une première couche (9), dite très dilatable, dont le coefficient de dilatation linéaire est compris entre 20 et 55 · $10^{-6}$ K$^{-1}$, et une seconde couche (10), dite peu dilatable, dont le coefficient de dilatation linéaire est inférieur à 10 · $10^{-6}$ K$^{-1}$, la seconde couche (10) étant de plus choisie parmi les métaux ductiles, l'inscription dans une telle structure se traduisant par une déformation permanente (6) de la couche ductile (10), cette déformation étant réflectrice de la lumière et comprise entre la limite élastique et la limite de rupture de la couche ductile (10).

2. Structure de mémoire selon la revendication 1, caractérisée en ce que la couche métallique très dilatable (9) est comprise entre le substrat (1) et la couche métallique peu dilatable mais ducticle (10).

3. Structure de mémoire selon la revendication 1, caractérisée en ce que la couche métallique peu dilatable mais ductile (10) est comprise entre le substrat (1) et la couche métallique très dilatable (9).

4. Structure de mémoire selon l'une quelconque des revendications 1 à 3, caractérisée en ce que la couche métallique très dilatable (9) est réalisée au moyen des métaux suivants: Cd, Zn, Tl, Mg, Al, Mn, Ag, pris isolément ou en alliage.

5. Structure de mémoire selon l'une quelconque des revendications 1 à 3, caractérisée en ce que la couche métallique peu dilatable (10) est réalisée au moyen des métaux suivants: Mo, Zr, Ti, Ta, Cr, Pt, pris isolément ou en alliage.

6. Procédé d'inscription dans une structure de mémoire selon l'une quelconque des revendications précédentes, caractérisée en ce que la couche d'inscription est déformée (6) par un faisceau laser, dont l'énergie thermique est absorbée par la double couche métallique (9 + 10) et transformée, dans la couche ductile (10), en une déformation mécanique (6) par allongement au-delà de la limite élastique, mais inférieure à la limite de rupture de la couche ductile (10).

## Patentansprüche

1. Permanente Speicherstruktur mit thermo-optischer Einschreibung und optischer Auslesung, die von einem Substrat (1) aus einem Material mit gerinem Ausdehnungskoeffizienten getragen ist, das mit einer Vorbeilaufbewegung angetrieben ist, wobei diese Struktur dadurch gekennzeichnet ist, daß die für die Einschreibung bestimmte Schicht mindestens eine metallische Doppelschicht aufweist, die von einer ersten Schicht (9), die als sehr wärmedehnbar bezeichnet wird und deren linearer Ausdehnungskoeffizient zwischen 20 und 55 · $10^{-6}$ K$^{-1}$ liegt, und einer zweiten Schicht (10), die als wenig wärmedehnbar bezeichnet wird und deren linearer Ausdehnungskoeffizient kleiner als 10 · $10^{-6}$ K$^{-1}$ ist, gebildet ist, wobei die zweite Schicht (10) aus den duktilen Metallen ausgewählt ist und die Einschreibung in eine solche Struktur zu einer permanenten Verformung (6) der duktilen Schicht (10) führt und diese Verformung lichtreflektierend ist und zwischen der Elastizitätsgrenze und der Bruchgrenze der duktilen Schicht (10) liegt.

2. Speicherstruktur nach Anspruch 1, dadurch gekennzeichnet, daß die sehr wärmedehnbare Metallschicht (9) zwischen dem Substrat (1) und der wenig wärmedehnbaren, jedoch duktilen Metallschicht (10) angeordnet ist.

3. Speicherstruktur nach Anspruch 1, dadurch gekennzeichnet, daß die wenig wärmedehnbare, aber duktile Metallschicht (10) zwischen dem Substrat (1) und der sehr wärmedehnbaren Metallschicht (9) angeordnet ist.

4. Speicherstruktur nach einem der Ansprüche 1 bis 3, dadurch gekennzeichnet, daß die sehr wärmedehnbare Metallschicht (9) mittels der folgenden, für sich oder in Legierung vorliegenden Metalle hergestellt ist: Cd, Zn, Tl, Mg, Al, Mn, Ag.

5. Speicherstruktur nach einem der Ansprüche 1 bis 3, dadurch gekennzeichnet, daß die wenig wärmedehnbare Metallschicht (10) mittels der folgenden, für sich oder in Legierung vorliegenden Metalle hergestellt ist: Mo, Zr, Ti, Ta, Cr, Pt.

6. Verfahren zur Einschreibung in eine Speicherstruktur nach einem der vorangehenden Ansprüche, dadurch gekennzeichnet, daß die für die Einschreibung bestimmte Schicht verformt wird (6) durch einen Laserstrahl, dessen Wärmeenergie von der metallischen Doppelschicht (9 + 10) absorbiert und in der duktilen Schicht (10) durch Dehnung derselben über die Elastizitätsgrenze hinaus, jedoch unter der Bruchgrenze der duktilen Schicht (10) in eine mechanische Verformung (6) umgewandelt wird.

## Claims

1. A permanent memory structure with thermo-optical writing-in and optical reading-out supported on a substrate (1) consisting of a material having a low coefficient of expansion and being driven with a passing motion, said structure being characterized in that the writing-in layer comprises at least a

5

metallic double layer formed by a first layer (9) said to be highly thermally expansible and having a linear coefficient of expansion of from 20 to 55 · $10^{-6}$ $K^{-1}$, and by a second layer (10) said to bei little thermally expansible and having a linear coefficient of expansion of less than 10 · $10^{-6}$ $K^{-1}$, wherein said second layer (10) is selected from among the ductile metals and writing into such a structure results in permanent deformation (6) of said ductile layer (10), said deformation being light reflective and being between the limit of elasticity and the breaking point of said ductile layer (10).

2. A permanent memory structure as claimed in claim 1, characterized in that the highly thermally expansible metal layer (9) is disposed between said substrate (1) and the little thermally expansible but ductile metal layer (10).

3. A permanent memory structure as claimed in claim 1, characterized in that the little thermally expansible but ductile metal layer (10) is disposed between said substrate (1) and said highly thermally expansible metal layer (9).

4. A permanent memory structure as claimed in any of the claims 1 to 3, characterized in that the highly thermally expansible metal layer (9) is made by means of the following metals which are present either per se or as an alloy: Cd, Zn, Tl, Mg, Al, Mn, Ag.

5. A permanent memory structure as claimed in any of the claims 1 to 3, characterized in that the little thermally expansible metal layer (10) is made by means of the following metals present either per se or as an alloy: Mo, Zr, Ti, Ta, Cr, Pt.

6. A method of writing into a memory structure in accordance with any of the preceding claims, characterized in that the writing-in layer is deformed (6) by a laser beam whose thermal energy ist absorbed by the metallic double layer (9 + 10) and is transformed in the ductile layer (10) by expansion thereof beyond the limit of elasticity but below the breaking point of said ductile layer (10) to result in a mechanical deformation (6).

# FIG.1

# FIG. 2

# FIG.3